# EUROPEAN PATENT SPECIFICATION

(11) **EP 1 852 711 B1**
(45) Date of publication and mention of the grant of the patent: **13.03.2013**
(21) Application number: 07106670.8
(22) Date of filing: 20.04.2007
(51) Int. Cl.: G01S 19/05, G01S 19/27

(54) **Ephemeris extension method for GNSS applications**
Ephemeriserweiterungsverfahren für GNSS-Anwendungen
Procédé d'extension éphéméride pour applications GNSS

(30) Priority: 24.04.2006 US 794102 P
(43) Date of publication of application: 07.11.2007
(60) Divisional application: 10010906.5
(73) Proprietor: Qualcomm Incorporated, San Diego, CA 92121 (US)
(72) Inventor: Garin, Lionel, Palo Alto, CA 94303 (US)
(74) Representative: Wagner & Geyer

(56) References cited:
- US-A- 6 058 338
- US-A1- 2002 068 997
- US-A1- 2002 188 403
- US-A1- 2002 190 898
- US-A1- 2004 263 386

## Description

### Background of the invention

The present invention relates generally to the field of Global Navigation Satellite Systems (GNSS) for navigation, such as the Global Positioning System (GPS) or Galileo.

In a GNSS system, satellites in orbit around the Earth broadcast signals that can be received by a receiver equipped to detect them. The signals are transmitted such that a receiver can determine, under adequate signal conditions, the time of transmission of the signal. By receiving four such signals, the receiver can determine the local time and its own position in a three-dimensional coordinate system.

Such systems often rely on the ability to determine the distance between a satellite and a receiver. By knowing three such distances, an accurate estimate of position can be made by determining the most likely intersection point of three spheres, each centered on a particular satellite and having a radius equal to the measured distance from the satellite to the receiver.

In order to make such a position determination, it is of course necessary for the receiver to have an estimate of each satellite's location. Such location estimates are generated with the help of satellite ephemeris data, which is data that is usable to estimate a satellite's position.

Such satellite ephemeris data is generally stored in the form of parameters which can be used in a known model of the satellite's orbit to generate a position estimate as a function of time. For example, the ephemeris calculations for GPS are described in the document GPS-ICD-200C which is hereby incorporated by reference.

Ephemeris data in the GPS system, for example, are broadcast by each satellite and come in two forms. First, GPS satellites broadcast "almanac data", which are a form of ephemeris data, although they are not generally referred to as such in the art. Almanac data are intended to be used to determine a rough estimate for a satellite's position for a period of more than a few hours after downloading. This can be useful for the receiver, for example, to determine which satellites are in the receiver's field of view, if the receiver also has a rough estimate of its own position. Almanac data are typically accurate for a few months to within a few kilometers.

GPS satellites also broadcast a more precise set of data referred to as "ephemeris data". GPS ephemeris data are typically accurate for a few hours to within a few meters. After a few hours, the accuracy of this data degrades rapidly, however.

Both GPS almanac and GPS ephemeris data are broadcast by each satellite as part of a navigation data message that is superimposed upon a CDMA pseudorandom noise code. The ephemeris data for a particular satellite take typically (open sky - no visibility interruption) 30 seconds to download. They cannot be downloaded if the signal is weak (less than -145 dBm). In weak signal conditions, ephemeris data are typically transmitted to the (A)-GPS receiver from an assistance network. Under low signal power conditions, such as those experienced indoors, it is often very difficult to recover the GPS navigation message and thus to recover GPS ephemeris data. This means that GPS receivers which have not been allowed a clear view of the sky for several hours will experience a degradation in their position solution accuracy based on inaccurate estimates of each satellite's current position.

Thus, when a vehicle with a PND (Portable Navigation Device) or GPS receiver mounted on the dashboard or the windshield is parked overnight in an indoor garage, the GPS functions usually cannot deliver a position until quite a long time after the vehicle leaves the garage the next day. The ephemeris data are outdated because of the GPS OFF duration of more than 4 hours (the usual maximum validity period for broadcast ephemerides). Here the term "valid" means producing an error within a preset tolerance. The GPS suction takes a long time (up to 10 minutes) in turban canyon environments to recover the broadcast ephemerides from the satellites, due to the low signal level conditions, and the often highly interrupted nature of the received signals. No fix is possible until the broadcast ephemerides are recovered, even if the satellites are tracked.

Thus there is currently a need to extend and improve the accuracy of ephemeris data and the length of time during which ephemeris data can provide an accurate solution.

Document US6658338 discloses a system for transmitting assistance data to a mobile GPS receiver in which the satellite position is computed by a server in using almanac and ephemeris data. The almanac data is made available to the receiver and a location error resulting from the difference between the two parallel computations of the server is then also forwarded to the receiver. The corrections are applied directly to the position coordinates, so that almanac data are never altered besides the regular updates from the server. As a result, the lifetime of the broadcast ephemerides data remains unchanged.

Document US2002/0188403 discloses a method and apparatus computing satellite tracking data with similar accuracy as broadcast ephemeris data but with longer validity, typically 6 hours. The trajectory data are modeled without any broadcast ephemeris data such as almanac data.

### Summary of the invention

The present invention discloses methods and apparatus for improving the accuracy at a receiver position as set forth in the appended claims.

One embodiment of the invention relates to a method for improving the accuracy of a receiver position, comprising applying a correction to almanac data. Optionally, the method may be so performed that the step of applying a correction to almanac data comprises obtaining a correction term from a prediction file and applying the term to an estimated satellite position. The method may also be performed such that a corrected estimated satellite position with an accuracy of few meters results, less than 30 meters but preferably less than 5 meters, from the step of applying a correction to almanac data accurate to within about two kilometers. Preferably, the correction is based on data which is received from a network; and the data allows the corrected estimated satellite position to be made accurate to within few meters within seven days after a reception time of the data from the network.

Certain embodiments of the invention relate to a method for generating an extended ephemeris prediction file, comprising: obtaining data comprising a prediction of a satellite orbit; computing correction terms related to a difference between the prediction of a satellite orbit and a second prediction resulting from almanac data; and wherein the prediction file is valid for at least seven days and comprises less than 60480 Bytes. The method can optionally be carried out such that the step of computing correction terms related to a difference between the prediction of a satellite orbit and a second prediction resulting from almanac data further comprises using both a harmonic model and a polynomial model. The method can further comprise the step of computing correction terms for satellite clock data and the step of transmitting the prediction file over a SUPL network. Preferably, the prediction file comprises less than one kilobyte per day of validity. In a preferred embodiment, the step of computing correction terms related to a difference between the prediction of a satellite orbit and a second prediction resulting from almanac data further comprises applying a least squares methodology to minimize the difference between the prediction of satellite orbit and the second prediction, and further comprises weighting data from the prediction of satellite orbit that is further in the future less than data from the prediction of satellite orbit that is nearer in the future.

Still further embodiments of the invention relate to a computer readable medium having computer code embedded therein that, when executed, would carry out a method for generating an extended ephemeris prediction file, comprising: obtaining data comprising a prediction of a satellite orbit; computing correction terms related to a difference between the prediction of a satellite orbit and a second prediction resulting from almanac data; wherein the prediction file is valid for at least seven days and comprises less than 60480 Bytes. The method carried out by the instructions can be such that the step of computing correction terms related to a difference between the prediction of a satellite orbit and a second prediction resulting from almanac data further comprises using both a harmonic model and a polynomial model. Optionally, the method carried out by the instructions further comprises the step of computing correction terms for satellite clock data and transmitting the prediction file over a SUPL network. In a preferred embodiment, the prediction file comprises less than one kilobyte per day of validity. Preferably, the step of computing correction terms related to a difference between the prediction of a satellite orbit and a second prediction resulting from almanac data further comprises applying a least squares methodology to minimize the difference between the prediction of satellite orbit and the second prediction and weighting data from the prediction of satellite orbit that is further in the future less than data from the prediction of satellite orbit that is nearer in the future.

Still other embodiments of the invention relate to a GNSS receiver, comprising: a communications port for receiving an almanac correction model; a memory for storing almanac data; circuitry for receiving GNSS signals; and a processor for calculating the position of the receiver based on the received GNSS signals and the position of a GNSS transmitter as calculated from almanac data and the almanac correction model. Optionally, the processor for calculating the position of the receiver based on the received GNSS signals and the position of the GNSS transmitters as calculated from almanac data and the almanac correction model is configured to calculate a corrected estimated GNSS transmitter position based on a harmonic correction model and a polynomial correction model.

### Brief Description of the Drawings

Fig. 1 shows a first extended ephemeris prediction file system flow.

Fig. 2 shows a second extended ephemeris prediction file system flow

Fig. 3 shows a third extended ephemeris prediction file system flow

Fig. 4 shows a system useful for extended ephemeris use.

### Detailed Description of the preferred embodiments

"Ephemeris Extension" is a technology that allows predicting a set of ephemeris over a period of time much longer than the original 2 hours, typically days. After 4 days the extension over time implies a loss in accuracy with respect to a position calculated from real ephemeris. With a good Ephemeris Extension, the Time To First Fix (TTFF) is always in the 5-15 seconds, in all conditions, which means that there are no more cold or warm starts. The impact is evident in situations where the receiver is switched on after a long period of time (>2 hours) in particular in a difficult environment (e.g., an urban canyon). In weak signal environments fix is still possible without real-time assistance data. Over longer periods, it is not necessary to have real-time assistance, if the user can accept a less accurate fix (after 4 days).

Referring again to the example of the vehicle leaving the parking garage, embodiments of the present invention would allow a first fix within at most 5-10 seconds after the vehicle leaves the garage. One principle is to store within the GPS receiver a set of long-validity ephemerides, which are loaded by other means than broadcast navigation messages (e.g. Internet connection, wireless connection, download of a file). The long-validity ephemerides usually come from a knowledge of the precise current position of a satellite, velocity and acceleration obtained from actual measurements made at reference stations. The position is propagated using an accurate force model (Precise Earth Gravity Model, Temporal Changes in Earth's Gravity, Sun and Moon Gravitational Effects, Solar Radiation Pressure, Yaw Bias Correction , etc.). A satellite clock prediction is also made, including a current clock offset, a drift model and drift rate model. There is also a random element in the satellite clocks that can not be accurately predicted.

The raw result of the prediction phase is a sequence of accurate predicted positions per satellite typically every 15 minutes, plus a clock bias model. This information then needs to be compacted to be sent to the GPS receiver where it will be de-compacted and used for navigation.

Embodiments of the present invention comprise using a good long term model of overall satellite orbit (almanac), and computing an estimate of the correction to apply to the almanac model. These corrections are quite small (usually 2 km or less), are very smooth (no high frequency terms, so that they can be captured in a relatively small number of parameters). The corrections can have harmonic terms, which optimally have a period equal to the revolution period of the satellite or multiples thereof, plus a polynomial correction composed of an initial offset term, a linear drift term and a second order term, reflecting the drift rate. Further terms are possible, depending on the accuracy desired.

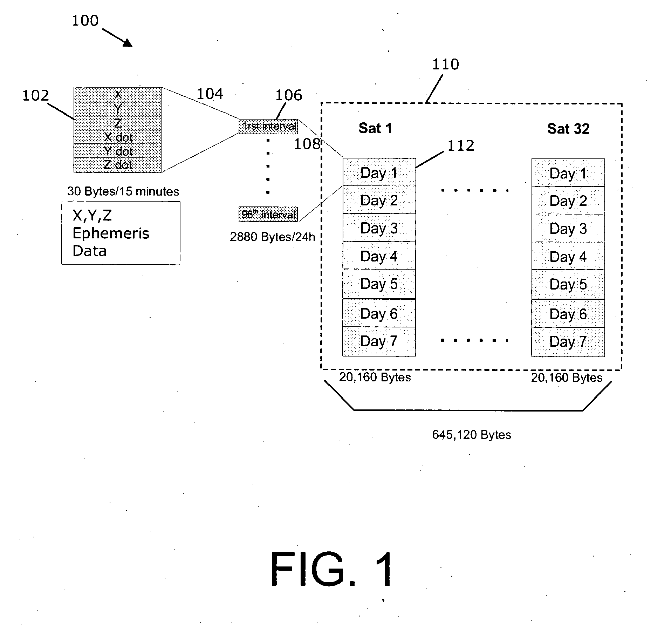

The correction terms can be estimated by applying a least squares parameter fit to the difference between the model described above and satellite position prediction data in the form of, for example, spatial (x, y, and z) and time (t) coordinates. These coordinates can be provided for a certain time period into the future, as generated from data gathered at reference stations, for example those of the NASA Jet Propulsion Laboratory (JPL). An example of such data collected as a coherent file is shown in Fig. 1. The JPL prediction data has the advantages of being well-tested, accurate, and allowing for fast validation with low risk.

Fig. 1 shows an extended ephemeris prediction file system flow. Here the term "prediction file" means a collection of data useful for improving an ephemeris prediction. In system 100 X,Y,Z formatted data 102 such as that available from the JPL is collected. The can present, for example, for each satellite, an X coordinate, a Y coordinate and a Z coordinate, as well as the first time derivatives of these coordinates X dot, Y dot and Z dot respectively for a given point in time tₙ. The time between any tₙ and tₙ₊₁ can be any amount of time, but in the embodiment shown in Fig. 1 is equal to fifteen minutes. In the embodiment shown in Fig. 1, each coordinate and coordinate derivative is represented by a five-byte data word, such that the data for each tₙ represents thirty bytes of data.

At step 104, data is collected from data 102 to form single days' worth of data 106 comprising ninety-six intervals each, or 2880 bytes worth of data for a single satellite on a single day. For a prediction file 110 that allows for seven days' 112 worth of prediction data for each of thirty-two satellites, the total file size would be 645,120 bytes. Of course, the length of the prediction file can be changed by adding or subtracting days depending on the needs of the system, thus trading overall accuracy and file size against the length of prediction data available.

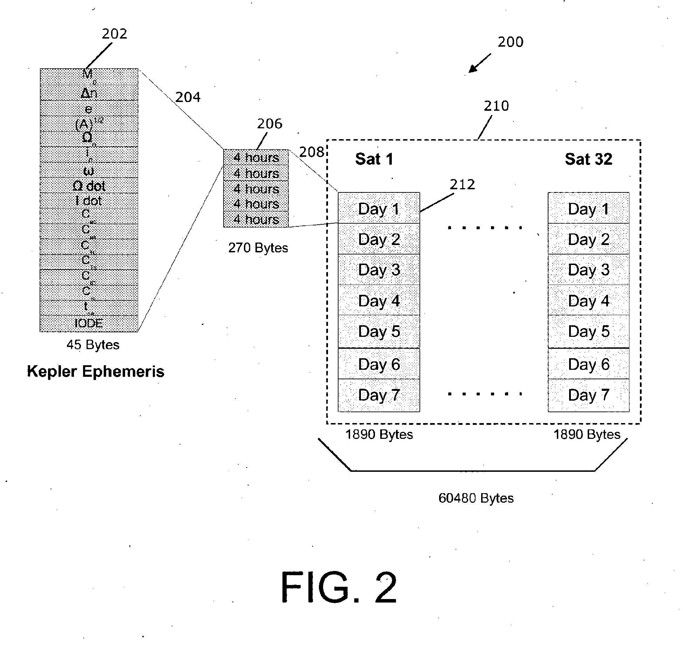

Figure 2 shows a second extended ephemeris prediction file system flow 200. The system 200 models a set of satellite prediction data in four-hour intervals 206, instead of fifteen minute intervals as shown in Fig. 1. The system does this by taking satellite prediction data over a four-hour period and modeling it using standard broadcast ephemeris parameters 202. Each four-hour interval is collected into a set of four-hour intervals at step 204. Each set of four-hour intervals is packaged into a prediction file 210, which comprises a number of days' (here shown as seven) worth of prediction data for each satellite (here shown as thirty-two).

Using ephemeris parameters to model a multi-hour interval of data allows the data to be compacted. In contrast to the system shown in Fig. 1, twenty-four hours' worth of data comprises only 270 bytes, and seven days' worth of data 1890 Bytes. A seven-day prediction file for thirty-two satellites therefore comprises 60480 bytes.

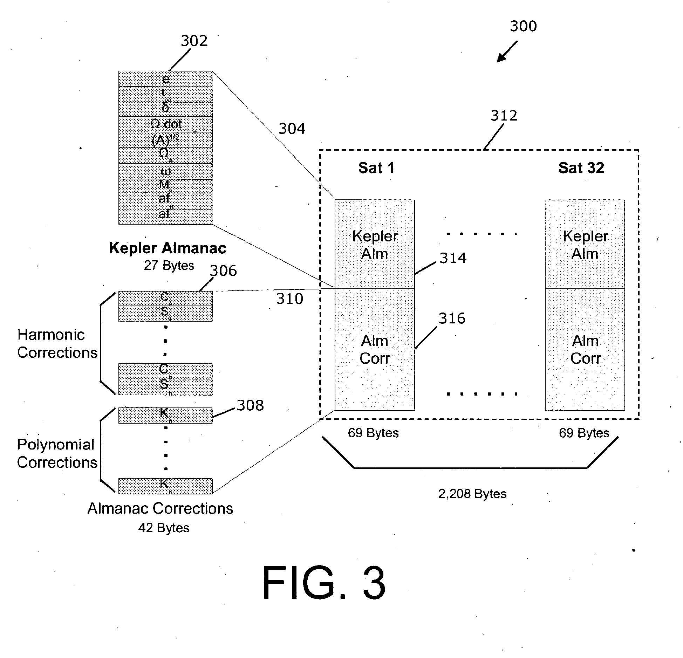

The size of the prediction file can be reduced even further using the almanac parameters to model intervals of data, as shown in Fig. 3. Here, the term "almanac data" refers to a collection of parameters for a longer-term model of a satellite's orbit, which would not normally offer a good enough prediction to locate a receiver's position. Fig. 3 illustrates a third extended ephemeris prediction file system flow 300 based on the use of almanac data. The system uses Kepler almanac parameters 302 to model longer intervals of data, shown in figure 3 as an entire weeks' worth of data. The Kepler almanac 302 for a satellite has ten parameters, which in a preferred embodiment is represented using twenty-seven bytes. In addition to the Kepler almanac, correction terms comprising harmonic correction terms 306 and polynomial correction terms 308 are generated.
In a preferred embodiment, the correction terms 306 and 308 comprise in total forty bytes.

The Kepler almanac 302 and the correction terms 306 and 308 are collected in steps 304 and 310 into a prediction file. In a preferred embodiment, each satellite has sixty-seven bytes of data, comprising Kepler almanac parameters 314 and correction factors 316, which can comprise harmonic corrections 306 and polynomial correction factors 308. Of course, a person of skill in the art will understand that the exact choice of model parameters is modifiable to produce desired levels of accuracy and prediction file size. The total prediction file size shown in the embodiment of Fig. 3 can thereby be brought to less than one kilobyte per day for thirty-two satellites, in a preferred embodiment 2,144 Bytes for seven days for thirty-two satellites.

Since the position prediction (x, y, z, t) is quite good at the beginning of the prediction period, but degrades with the passing time, the weighting used during the least squares estimation can be decreased vs. time (square law vs. time). It is thereby possible to obtain a limited number of correction parameters, but with a modeling error which is still small at the beginning of the period, and then increases with the time, where its impact is less important, as the prediction error is quite large as well. This results in a smaller downloadable file size (less than 3 kB as shown in Fig. 3) than a prediction of broadcast ephemeris, which for a seven day period results in a download file size of about 60 kB, as shown in Fig. 2.

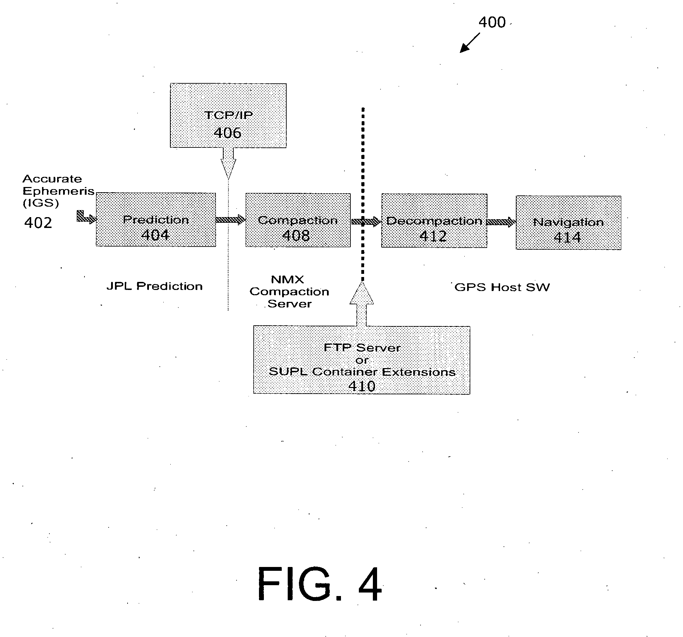

A theory of operation may be described in reference to the system shown in Fig. 4. Fig. 4 shows a system 400 used to estimate a position from an extended ephemeris prediction file. A set of reference stations (not shown) receives measurements 402 from the satellites (not shown). A current position, velocity, acceleration and jerk is computed from the measurements for each satellite. Using a force model, a sequence of positions, velocities, accelerations is derived by computation for a period going up to 7 days (depending on the sophistication of the model), at step 404. In a preferred embodiment, the interval between position points is 15 minutes. In parallel, from the satellite clock observation, a clock model is computed and used to predict the clock error and drift for the 7 next days.

The data describing satellite position with time and clock error and drift are sent in a preferred embodiment over TCP/IP network 408, which may be a network such as the Internet and may comprise landline, satellite or other wireless networks. At step 408, current almanac for a given satellite is selected and used to compute a set of satellite positions for the same 7 days in the future, at the same times when the position is available from the prediction. This effectively compacts the data describing satellite position with time and clock error, in a preferred embodiment according to the method shown in Fig. 3. At step 408, the position difference in x, y, z between almanac prediction and accurate prediction is computed over the whole time interval. Preliminary analysis shows that this error does not grow beyond 2 km over a one week period, and the difference is very smooth.

An estimate of the error in function of time is computed using an harmonic and polynomial model. The coefficients of the model are determined using a least squares formulation, minimizing the sum squared of the residuals. The number of parameters is estimated to 8 for harmonic model, and 3 for polynomial model. Other estimation techniques could be also used as a replacement to least squares.

Also at step 408, an extended ephemeris prediction file is created, including, in a preferred embodiment: ionospheric correction parameters (30 Bytes total), and per satellite, current almanac (10 parameters in 27 Bytes in compacted ICD-GPS200C format), 6 correction parameters for the X direction, 6 correction parameters for the Y direction, 6 correction parameters for the Z direction, and 3 parameters for satellite clock correction. Thus, for 32 satellites, the total number of correction parameters is : 32*(6*3+3)= 672 parameters. Using two Bytes per parameter, the file size is about 3 kB (30+32*27+2*672= 2238 Bytes), as is shown in Fig. 3, without ionospheric corrections.

The file is loaded into the GPS receiver by any means possible, including for example, by download during synchronization for a PDA (personal digital assistant), by FTP (File transfer protocol) from the web, during an A-GPS (Assisted Global Positioning System) session as ancillary information. An exemplary download using an FTP service or SUPL (Secure User Plane for Location) Container Extension download 410 is shown in Fig. 4.

Once a prediction file has been received at a receiver (as indicated by a vertical dashed line at step 410), a decompaction step can take place. When the GNSS receiver needs to compute a position, having acquired at least 4 satellites and having measurements available for them, but no broadcast ephemeris data, it first retrieves the almanac from the locally stored file, computes an X, Y, Z position from the almanac model at the required time. In parallel, it obtains the harmonic and polynomial correction terms, and computes the X, Y, Z corrections for the required time. In this context, obtaining a correction term means either looking up the term directly in a memory or deriving the term from data in a memory. The corrections are then applied to the X, Y, Z from the almanac model. Of course the corrections can be applied in any number of ways involving any number of mathematical operations and can include the alteration of almanac parameters directly. These correction terms ultimately affect the estimated satellite position. As used in this specification, an "estimated satellite position" means any data relating to the position of a satellite, such as a coordinate in a coordinate system.

Advantages of certain embodiments of the present invention include the relatively small file size, such that network bandwidth is saved at download time. Furthermore, the small file size makes use of the extended ephemerides better in assisted GPS situations, for example through the SUPL standard. Proper weighting of the least squares fit for correction parameters will decrease the likelihood of a large error during the first few days of the extended ephemeris data validity period. It should also be noted that the correction term does not need to be computed with a very accurate time: an accuracy of several seconds is sufficient. This is due to the smoothness of the correction terms, which in turn is due to the good overall prediction made by the almanac, which is adjusted to be correct in average for over one week.

One particular embodiment of the invention involves a method of calculating a position, comprising using a corrected almanac model to calculate the position of at least one satellite; and using signals received from the at least one satellite with the position of the at least one satellite to calculate a user position.

Another embodiment of the invention is a GNSS receiver, comprising a communications port for receiving an almanac correction model; a memory for storing almanac data; circuitry for receiving GNSS signals; and a processor for calculating the position of the receiver based on the received GNSS signals and the position of the GNSS transmitters as calculated from almanac data and the almanac correction model.

A further embodiment of the invention is a method for providing long-validity satellite location data, comprising forming a satellite orbit model based on an available model accurate to within 3 km and providing correction data to increase the accuracy of predictions from the satellite orbit model when used in conjunction with the corrections.

Still another embodiment of the invention involves a method for generating a first satellite orbit model, comprising receiving data related to a predicted position of a satellite in orbit, using a second satellite orbit model to generate a further set of predictions, and generating a set of correction terms that correct the results of the second satellite orbit model to those of the first satellite orbit model.

Still another embodiment of the invention involves a method for generating a first satellite orbit model, comprising receiving data related to a predicted position of a satellite in orbit, using a second satellite orbit model to generate a further set of predictions, and generating a set of correction terms that correct the results of the second satellite orbit model to those of the first satellite orbit model, wherein the step of generating a set of correction terms comprises generating a set of correction terms for a multi-day period using a least-squares approach; and wherein the step of generating a set of correction terms further comprises weighting earlier data related to a predicted position of a satellite more heavily than later data related to a predicted position of a satellite.

## Claims

1. A method for improving the accuracy of a receiver position, comprising applying a correction to almanac data including steps of:
generating an extended ephemeris prediction file,
loading the prediction file into a GPS receiver,
obtaining, in the GPS receiver a correction term from the prediction file and
applying, in the GPS receiver, the correction term to an estimated satellite position determined based on the almanac data to obtain a corrected estimated satellite position, wherein the generation of the extended ephemeris prediction file, comprises the steps of:
obtaining data comprising a prediction of a satellite orbit;
computing correction terms related to a difference between the prediction of a satellite orbit and a second prediction of the satellite orbit resulting from almanac data,
**characterized in that** the prediction of a satellite orbit is determined based on propagating the current position of satellite obtained from actual measurements made at reference stations, using an accurate force model, in a sequence of predicted positions valid at least for several days.

2. The method of claim 1, wherein the corrected estimated satellite position results from the step of applying a correction to almanac data and the prediction file contains data allowing a corrected estimated satellite position accurate to within thirty meters.

3. The method of claim 2, wherein the step of loading a prediction file on a GNSS receiver includes receiving data from a network; and wherein the prediction file allows the corrected estimated satellite position to be made accurate to within thirty meters within seven days after a reception time of the data from the network.

4. The method of any of the preceding claims; wherein the prediction file comprises less than 60480 Bytes.

5. The method of any of the the previous claims, wherein the step of computing correction terms related to a difference between the prediction of a satellite orbit and a second prediction resulting from almanac data further comprises using both a harmonic model and a polynomial model.

6. The method of claim 5, further comprising the step of computing correction terms for satellite clock data.

7. The method of claim 5, further comprising transmitting the prediction file over a SUPL network.

8. The method of claim 5, wherein the prediction file comprises less than one kilobyte per day of validity.

9. The method of claim 5, wherein the step of computing correction terms related to a difference between the prediction of a satellite orbit and a second prediction resulting from almanac data further comprises applying a least squares methodology to minimize the difference between the prediction of satellite orbit and the second prediction.

10. The method of the previous claim, wherein the step of applying a least squares methodology to minimize the difference between the prediction of satellite orbit and the second prediction further comprises weighting data from the prediction of satellite orbit that is further in the future less than data from the prediction of satellite orbit that is nearer in the future.

11. A GNSS receiver, comprising:
a communications port for receiving an almanac correction model;
a memory for storing almanac data;
circuitry for receiving GNSS signals; and
a processor for calculating the position of the receiver based on the received GNSS signals and the position of a GNSS transmitter as calculated from almanac data and the almanac correction model in accordance with the the steps of claim 1.

12. The GNSS receiver of claim 11, wherein the processor for calculating the position of the receiver based on the received GNSS signals and the position of the GNSS transmitters as calculated from almanac data and the almanac correction model is configured to calculate a corrected estimated GNSS transmitter position based on.a harmonic correction model and a polynomial correction model.

## Patentansprüche

1. Ein Verfahren zum Verbessern der Genauigkeit einer Empfängerposition, das das Anwenden einer Korrektur auf Almanachdaten aufweist, das folgende Schritte beinhaltet:
Generieren einer erweiterten Ephemeriden-Prädiktions- bzw. -VorhersageDatei,
Laden der Vorhersagedatei in einen GPS-Empfänger,
Erlangen, in dem GPS-Empfänger, eines Korrekturterms aus der Vorhersagedatei und Anwenden, in dem GPS-Empfänger, des Korrekturterms auf eine geschätzte Satellitenposition, die basierend auf den Almanachdaten bestimmt wurde, um eine korrigierte geschätzte Satellitenposition zu erlangen,
wobei das Generieren der erweiterten Ephemeriden-Vorhersagedatei die folgenden Schritte aufweist:
Erlangen von Daten, die eine Vorhersage einer Satellitenumlaufbahn aufweisen;
Berechnen von Korrekturtermen, die sich auf eine Differenz zwischen der Vorhersage einer Satellitenumlaufbahn und einer zweiten Vorhersage der Satellitenumlaufbahn, die aus den Almanachdaten resultiert, beziehen,
**dadurch gekennzeichnet, dass** die Vorhersage einer Satellitenumlaufbahn bestimmt wird basierend auf der Fortführung der aktuellen Position eines Satelliten, die aus tatsächlichen Messungen erhalten wurde, die an Referenzstationen vorgenommen wurden, und zwar unter Verwendung eines genauen Kraftmodells, in eine Sequenz von vorhergesagten Positionen, die wenigstens für mehrere Tage gültig sind.

2. Verfahren nach Anspruch 1, wobei die korrigierten geschätzte Satellitenposition aus dem Schritt des Anwendens einer Korrektur auf Almanachdaten resultiert und wobei die Vorhersagedatei Daten enthält, die eine korrigierte geschätzte Satellitenposition zulassen, die auf dreißig Meter genau ist.

3. Verfahren nach Anspruch 2, wobei der Schritt des Ladens einer Vorhersagedatei auf einen GNSS-Empfänger das Empfangen von Daten von einem Netzwerk beinhaltet; und wobei die Vorhersagedatei gestattet, dass die korrigierte geschätzte Satellitenposition auf dreißig Meter genau bestimmt wird innerhalb von sieben Tagen nach einer Empfangszeit der Daten von dem Netzwerk.

4. Verfahren nach einem der vorhergehenden Ansprüche; wobei die Vorhersagedatei weniger als 60480 Bytes aufweist.

5. Verfahren nach einem der vorhergehenden Ansprüche, wobei der Schritt des Berechnens von Korrekturtermen, die in Beziehung stehen zu einer Differenz zwischen der Vorhersage einer Satellitenumlaufbahn und einer zweiten Vorhersage, die sich aus Almanachdaten ergibt, weiter das Verwenden von sowohl einem harmonischen Modell als auch einem Polynommodell aufweist.

6. Verfahren nach Anspruch 5, das weiter den Schritt des Berechnens von Korrekturtermen für Satellitenzeitdaten aufweist.

7. Verfahren nach Anspruch 5, das weiter das Senden der Vorhersagedatei über ein SUPL-Netzwerk aufweist.

8. Verfahren nach Anspruch 5, wobei die Vorhersagedatei weniger als ein Kilobyte pro Tag an Gültigkeit aufweist.

9. Verfahren nach Anspruch 5, wobei der Schritt des Berechnens von Korrekturtermen in Bezug auf eine Differenz zwischen der Vorhersage einer Satellitenumlaufbahn und einer zweiten Vorhersage, die sich aus Almanachdaten ergibt, weiter das Anwenden einer Kleinste-Quadrate- bzw. Least-Square-Methodik aufweist, um die Differenz zwischen der Vorhersage der Satellitenumlaufbahn und der zweiten Vorhersage zu minimieren.

10. Verfahren nach dem vorhergehenden Anspruch, wobei der Schritt des Anwendens einer Kleinste-Quadrate-Methodik, um die Differenz zwischen der Vorhersage der Satellitenumlaufbahn und der zweiten Vorhersage zu minimieren, weiter das geringere Gewichten von Daten aus der Vorhersage der Satellitenumlaufbahn, die weiter in der Zukunft liegt, als von Daten aus der Vorhersage der Umlaufbahn, die näher in der Zukunft liegt, aufweist.

11. Ein GNSS-Empfänger, der Folgendes aufweist:
einen Kommunikationsanschluss zum Empfangen eines Almanach-Korrekturmodells;
einen Speicher zum Speichern von Almanach-Daten;
Schaltungen zum Empfangen von GNSS-Signalen; und
einen Prozessor zum Berechnen der Position des Empfängers basierend auf den empfangenen GNSS-Signalen und der Position eines GNSS-Senders, wie sie aus den Almanach-Daten und dem Almanach-Korrekturmodell gemäß den Schritten nach Anspruch 1 berechnet wurde.

12. GNSS-Empfänger nach Anspruch 11, wobei der Prozessor zum Berechnen der Position des Empfängers basierend auf den empfangenen GNSS-Signalen und der Position der GNSS-Sender, wie sie aus den Almanach-Daten und dem Almanach-Korrekturmodell berechnet wurde, konfiguriert ist zum Berechnen einer korrigierten geschätzten GNSS-Senderposition basierend auf einem harmonischen Korrekturmodell und einem Polynomkorrekturmodell.

## Revendications

1. Procédé pour améliorer la précision d'une position de récepteur, comprenant l'application d'une correction à des données d'almanach, comprenant les étapes suivantes :
générer un fichier de prédiction d'éphémérides étendu,
charger le fichier de prédiction dans un récepteur GPS,
obtenir, dans le récepteur GPS, un terme de correction à partir du fichier de prédiction, et
appliquer, dans le récepteur GPS, le terme de correction à une position de satellite estimée déterminée sur la base des données d'almanach pour obtenir une position de satellite estimée corrigée, la génération du fichier de prédiction d'éphémérides étendu comprenant les étapes suivantes :
obtenir des données comprenant une prédiction d'une orbite de satellite ;
calculer des termes de correction associés à une différence entre la prédiction d'une orbite de satellite et une deuxième prédiction de l'orbite de satellite résultant de données d'almanach,
**caractérisé en ce que** la prédiction d'une orbite de satellite est déterminée sur la base de la propagation de la position de satellite courante obtenue à partir de mesures réelles faites au niveau de stations de référence, en utilisant un modèle à forçage de précision, dans une séquence de positions prédites valide au moins pour plusieurs jours.

2. Procédé selon la revendication 1, dans lequel la position de satellite estimée corrigée résulte d'une étape consistant à appliquer une correction à des données d'almanach et le fichier de prédiction contient des données permettant d'obtenir une position de satellite estimée corrigée avec une précision de trente mètres.

3. Procédé selon la revendication 2, dans lequel l'étape consistant à charger un fichier de prédiction sur un récepteur GNSS comprend la réception de données à partir d'un réseau ; et dans lequel le fichier de prédiction permet d'obtenir la position de satellite estimée corrigée avec une précision de trente mètres dans les sept jours suivant l'instant de réception des données à partir du réseau.

4. Procédé selon l'une quelconque des revendications précédentes ; dans lequel le fichier de prédiction contient moins de 60480 octets.

5. Procédé selon l'une quelconque des revendications précédentes, dans lequel l'étape consistant à calculer des termes de correction associés à une différence entre la prédiction d'une orbite de satellite et une deuxième prédiction résultant de données d'almanach comprend en outre l'utilisation à la fois d'un modèle harmonique et d'un modèle polynomial.

6. Procédé selon la revendication 5, comprenant en outre une étape consistant à calculer des termes de correction pour des données d'horloge de satellite.

7. Procédé selon la revendication 5, comprenant en outre la transmission du fichier de prédiction sur un réseau SUPL.

8. Procédé selon la revendication 5, dans lequel le fichier de prédiction contient moins d'un kilo-octet par jour de validité.

9. Procédé selon la revendication 5, dans lequel l'étape consistant à calculer des termes de correction associés à une différence entre la prédiction d'une orbite de satellite et une deuxième prédiction résultant de données d'almanach comprend en outre l'application d'une méthodologie des moindres carrés pour minimiser la différence entre la prédiction de l'orbite de satellite et la deuxième prédiction.

10. Procédé selon la revendication précédente, dans lequel l'étape consistant à appliquer une méthodologie des moindres carrés pour minimiser la différence entre la prédiction de l'orbite de satellite et la deuxième prédiction comprend en outre de pondérer plus faiblement les données provenant de la prédiction de l'orbite de satellite qui sont plus loin dans le futur par rapport aux données provenant de la prédiction de l'orbite de satellite qui sont plus près dans le futur.

11. Récepteur GNSS, comprenant :
un port de communication pour recevoir un modèle de correction d'almanach ;
une mémoire pour mémoriser des données d'almanach ;
un circuit pour recevoir des signaux GNSS ; et
un processeur pour calculer la position du récepteur sur la base des signaux GNSS reçus et de la position d'un émetteur GNSS telle que calculée à partir de données d'almanach et du modèle de correction d'almanach selon les étapes de la revendication 1.

12. Récepteur GNSS selon la revendication 11, dans lequel le processeur pour calculer la position du récepteur sur la base des signaux GNSS reçus et de la position des émetteurs GNSS, telle que calculée à partir de données d'almanach et du modèle de correction d'almanach, est agencé pour calculer une position d'émetteur GNSS estimée corrigée sur la base d'un modèle de correction harmonique et d'un modèle de correction polynomial.
